(19) Europäisches Patentamt
European Patent Office
Office européen des brevets

(11) **EP 3 721 691 A1**

(12) **EUROPÄISCHE PATENTANMELDUNG**

(43) Veröffentlichungstag:
**14.10.2020 Patentblatt 2020/42**

(51) Int Cl.:
**A01B 59/041** *(2006.01)* **A01B 59/06** *(2006.01)*

(21) Anmeldenummer: **20168392.7**

(22) Anmeldetag: **07.04.2020**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **12.04.2019 DE 102019205321**

(71) Anmelder: **Deere & Company**
**Moline, IL 61265 (US)**

(72) Erfinder:
• **JENS, LETSCHER**
**68163 Mannheim (DE)**
• **REINMUTH, FLORIAN**
**68163 Mannheim (DE)**

(74) Vertreter: **Dehnhardt, Florian Christopher**
**John Deere GmbH & Co. KG**
**Global Intellectual Property Services**
**John-Deere-Straße 70**
**68163 Mannheim (DE)**

(54) **VERFAHREN ZUR STEUERUNG DES BETRIEBS EINES ANBAUGERÄTES**

(57) Die Erfindung betrifft ein Verfahren zur Steuerung des Betriebs eines Anbaugerätes (12), welches über einen Oberlenker und zwei Unterlenker eines Krafthebers (14) an einen Traktor (16) gekoppelt ist. Ein Wirkpunkt (WP) wird unter mindestens folgenden geometrischen Punkten am Traktor (16) ausgewählt:
- ein Zugpunkt (P_z) als geometrischer Schnittpunkt gedachter Verlängerungen beider Unterlenker, und

- ein Polpunkt (P_p) als geometrischer Schnittpunkt gedachter Verlängerungen des Oberlenkers und eines Unterlenkers.

Eine Lage (L_ist) des ausgewählten Wirkpunktes (WP) wird ermittelt und über eine Anzeigeeinheit (22) signalisiert und/oder abhängig von einem Vergleich mit einer Soll-Vorgabe (V_soll) verstellt.

FIG. 1

EP 3 721 691 A1

**Beschreibung**

Die Erfindung betrifft ein Verfahren zur Steuerung des Betriebs eines Anbaugerätes, welches über einen Oberlenker und zwei Unterlenker eines Krafthebers an einen Traktor gekoppelt ist.

Aus US 9 555 813 B2 ist ein Verfahren zur Vermeidung von Instabilitäten einer Fahrzeug-Anhänger-Kombination bekannt. Bei diesem Verfahren wird mittels einer Kamera beispielsweise ein Gierwinkel des Anhängers bestimmt, der mit einem Schwellenwert verglichen wird. Abhängig von dem Vergleichsergebnis kann ein Warnsignal ausgegeben werden, um einem ESP-System oder dem Fahrer Korrekturmaßnahmen zu ermöglichen. In DE 10 2015 224 757 A1 ist an einem Traktor eine Vorrichtung vorgesehen, um die Höhenlage eines vom Traktor gezogenen Schleppgerätes in Form eines Pflugs zu ermitteln. Bei Abweichung von einer Referenz-Höhenlage wird eine hydraulische Betätigungseinheit aktiviert, um den Pflug zu verschwenken.

Der vorliegenden Erfindung liegt die Aufgabe zugrunde, auf einfache Weise einen effizienten Arbeitsbetrieb mit einem Anbaugerät zu ermöglichen.

Diese Aufgabe wird durch ein Verfahren mit den Merkmalen des Patentanspruchs 1 gelöst.

Weitere vorteilhafte Ausgestaltungen des erfindungsgemäßen Verfahrens gehen aus den Unteransprüchen hervor.

Gemäß Patentanspruch 1 ist bei dem Verfahren zur Steuerung des Betriebs eines Anbaugerätes letzteres über einen Oberlenker und zwei Unterlenker eines Krafthebers, insbesondere Dreipunkt-Krafthebers, an einen Traktor gekoppelt. Dabei wird ein Wirkpunkt unter mindestens folgenden möglichen geometrischen Punkten am Traktor ausgewählt:

- ein Zugpunkt als geometrischer Schnittpunkt gedachter Verlängerungen beider Unterlenker,

- ein Polpunkt als geometrischer Schnittpunkt gedachter Verlängerungen des Oberlenkers und eines Unterlenkers bzw. beider Unterlenker.

Während des Verfahrens wird eine Lage (z.B. als Koordinaten innerhalb eines definierten Koordinatensystems) des ausgewählten Wirkpunktes ermittelt. Beispielsweise kann dessen aktuelle Lage mittels geeigneter physikalischer Hilfsvariablen, Messpositionen am Traktor und/oder Anbaugerät und entsprechend positionierter Sensormittel automatisiert ermittelt werden.

Eine ermittelte Lage des ausgewählten Wirkpunktes wird über eine Anzeigeeinheit (z.B. Displayanzeige) dem Fahrer bzw. einem Benutzer signalisiert. Der Fahrer oder Benutzer hat dann die Möglichkeit, Einstellungen am Anbaugerät und/oder Traktor und/oder dessen Kraftheber vorzunehmen, um den ausgewählten Wirkpunkt zu verstellen. Hierdurch kann der Fahrer ausgehend von der signalisierten aktuellen Lage des Wirkpunktes dessen Lage optimieren.

Alternativ oder zusätzlich zur Signalisierung der ermittelten Lage des Wirkpunktes wird die ermittelte Lage des Wirkpunktes abhängig von einem Vergleich mit einer Soll-Vorgabe verstellt. Hierdurch kann der ausgewählte Wirkpunkt automatisiert optimiert werden. Beispielsweise können über entsprechende Steuersignale bzw. Verstellsignale (z.B. über ein traktorseitiges Bussystem oder an hydraulische und/oder elektrische Aktuatoren) Einstellungen am Anbaugerät und/oder Traktor und/oder dessen Kraftheber automatisiert vorgenommen werden.

Wie bereits erwähnt, ist eine automatisierte Verstellung des Wirkpunktes von einem Vergleich seiner ermittelten Lage mit einer Soll-Vorgabe abhängig. Abhängig vom Vergleichsergebnis können entsprechende Verstellsignale generiert werden, welche als Steuersignale an Aktuatoren gesendet werden. Mittels dieser Aktuatoren werden vorzugsweise die Unterlenker und/oder der Oberlenker des Krafthebers und/oder das Anbaugerät verstellt, wodurch eine Verstellung der aktuellen Lage des ausgewählten Wirkpunktes erfolgen kann.

Die Soll-Vorgabe wird vorzugsweise durch den Fahrer (z.B. über eine Benutzerschnittstelle) oder durch eine traktorseitige Steuerung (z.B. über ein Bussystem oder Steuergerät) generiert.

Während des vorgenannten Vergleiches wird vorzugsweise zunächst eine Abweichung zwischen der aktuellen Lage und der Soll-Vorgabe ermittelt und danach die ermittelte Abweichung mit einem vorbestimmten Abweichungs-Schwellenwert verglichen. Die automatisierte Verstellung des Wirkpunktes kann derart gesteuert sein, dass eine Verstellung bzw. Optimierung des Wirkpunktes nur dann erfolgt, wenn die ermittelte Abweichung den vorbestimmten Abweichungs-Schwellenwert erreicht oder überschreitet.

Durch die geschilderte Optimierung des jeweiligen Wirkpunktes wird der Arbeitsbetrieb des Anbaugerätes mit geringem technischen Aufwand effizienter, sei es durch eine Optimierung seitens des Fahrers bzw. Benutzers oder durch eine automatisierte Optimierung. Dies senkt den Kraftstoffverbrauch des Traktors und spart Arbeitszeit. Gleichzeitig wird eine hohe Arbeitsqualität des Anbaugerätes unterstützt. Außerdem wirkt die Optimierung des ausgewählten Wirkpunktes als eine Assistenzfunktion für den Fahrer bzw. Benutzer, so dass er vor und während des Arbeitsbetriebes erheblich entlastet wird. Insgesamt entsteht eine höhere Produktivität bei niedrigeren Betriebskosten.

Ausgehend von der ermittelten Lage kann eine Verstellung des Wirkpunktes dazu genutzt werden, auf technisch einfache Weise gezielt ein vom Fahrer bzw. Benutzer gewünschtes Arbeitsbetriebsverhalten des Traktors und/oder des Anbaugerätes zu erreichen.

Beispielsweise können während des Arbeitseinsatzes (z.B. Pflügen, sich ändernde Boden- und Topographieeigenschaften wie etwa Hanglage) ein unerwünschtes Gieren und entsprechend notwendige Lenkeingriffe durch den Fahrer vermieden werden, indem die Lage des Zugpunktes optimiert wird. Bei einer anderen Verstellung des Zugpunktes kann beispielsweise auch ein definierter Seitenzug des Anbaugerätes relativ zu einer Furchenwand beim Pflügen realisiert werden.

Mit einer Verstellung des Polpunktes kann eine Traktor-Anbaugerät-Kombination ebenfalls beim Arbeitsbetrieb unterstützt werden, z.B. bei der Bodenbearbeitung, Zugarbeiten oder auch bei einem Zapfwellenantrieb. Beispielsweise kann - abhängig von dem verwendeten Anbaugerät - eine Positionierung des Polpunktes in Fahrtrichtung kurz hinter der Vorderachse des Traktors zu einer passenden Belastung der Vorderachse sowie zu einem ruhigen Tiefenverhalten führen. Die Lage des Polpunktes kann derart verstellt werden, dass das Anbaugerät mit geringem Kraftaufwand komfortabel eingezogen werden kann. Für eine besonders wirksame Rückverfestigung von Führungswalzen verschiedener Anbaugeräte (z.B. Grubber, Scheibenegge) kann der Polpunkt vorzugsweise in Fahrtrichtung vor die Vorderachse des Traktors verstellt werden.

Vorzugsweise beinhaltet die Ermittlung der aktuellen Lage des Wirkpunktes auch die Ermittlung einer geometrischen Arbeitslinie, auf der dieser Wirkpunkt liegt und welche diesen Wirkpunkt mit einem Arbeitspunkt des Anbaugerätes verbindet. Diese Arbeitslinie kann dann ebenfalls über eine Anzeigeeinheit signalisiert und/oder abhängig von einem Vergleich mit einer Soll-Vorgabe verstellt werden. Die Soll-Vorgabe kann z.B. eine Soll-Lage der Arbeitslinie mit einer Soll-Steigung oder einem Soll-Winkel der Arbeitslinie relativ zu einer Bezugsgeraden oder Bezugsebene aufweisen.

Wenn die Arbeitslinie den Zugpunkt als ausgewählten Wirkpunkt mit dem Arbeitspunkt verbindet, liegt die Arbeitslinie vorzugsweise in einer durch eine Querrichtung (z.B. y-Achse eines Koordinatensystems) und eine Längsrichtung (z.B. x-Achse eines Koordinatensystems) des Traktors aufgespannten Ebene ein. Beispielsweise kann eine Ermittlung dieser Arbeitslinie dazu genutzt werden, um festzustellen, ob an der Traktor-Anbaugerät-Kombination ein Giermoment angreift. Ein solches Giermoment kann dann abhängig von einer Soll-Vorgabe durch eine entsprechende Verstellung des Wirkpunktes automatisch korrigiert oder vermieden werden. In einer bevorzugten Anwendung tritt kein Gieren bzw. Seitenzug auf, wenn die ermittelte Arbeitslinie durch einen Koordinatenursprung (z.B. ein Mittelpunkt an der Hinterachse des Traktors) eines am Traktor definierten Koordinatensystems verläuft.

Wenn die Arbeitslinie den Polpunkt als ausgewählten Wirkpunkt mit dem Arbeitspunkt verbindet, liegt die Arbeitslinie vorzugsweise in einer durch eine Hochrichtung (z.B. z-Achse eines Koordinatensystems) und eine Längsrichtung (z.B. x-Achse eines Koordinatensystems) des Traktors aufgespannten Ebene ein. Beispielsweise kann eine Ermittlung dieser Arbeitslinie dazu genutzt werden, um festzustellen, ob etwa bei Zugarbeiten oder bei einem Zapfwellenbetrieb eine Steigung dieser Arbeitslinie und folglich der Arbeitsbetrieb optimiert werden kann.

In einer bevorzugten Ausführungsform weist die Soll-Vorgabe eine Soll-Lage des ausgewählten Wirkpunktes auf. Die Soll-Lage kann beispielsweise als Koordinaten bezüglich eines definierten Koordinatenursprungs bereitgestellt werden. Beispielsweise wird die Lage des Wirkpunktes relativ zum Traktor an einer Anzeigeeinheit dem Fahrer bzw. Benutzer signalisiert, während dieser über eine Benutzerschnittstelle eine Soll-Lage des Wirkpunktes (vorzugsweise an der Anzeigeeinheit sichtbar) vorgeben kann.

In einer weiteren bevorzugten Ausführungsform weist die Soll-Vorgabe eine Soll-Lage einer Arbeitslinie mit einer geometrischen Soll-Steigung relativ zu einer Bezugsgeraden oder Bezugsebene auf. Dabei verbindet diese Gerade eine Soll-Lage des ausgewählten Wirkpunktes mit einem Arbeitspunkt des Anbaugerätes. Auch bei dieser Ausführungsform kann die aktuelle Lage der Arbeitslinie relativ zum Traktor an einer Anzeigeeinheit dem Fahrer bzw. Benutzer signalisiert werden, während dieser über eine Benutzerschnittstelle eine Soll-Steigung dieser Geraden (vorzugsweise an der Anzeigeeinheit sichtbar) vorgeben kann. Die Soll-Steigung kann auch durch andere mathematischphysikalische Größen repräsentiert vorgegeben werden.

Beispielsweise kann die Soll-Steigung einer den Zugpunkt mit dem Arbeitspunkt verbindenden Arbeitslinie derart vorgegeben werden, dass ein Gieren bzw. Seitenzug der Traktor-Anbaugerät-Kombination vermieden wird.

Bei Zugarbeiten kann eine Soll-Steigung der Arbeitslinie (hier Verbindung Polpunkt - Arbeitspunkt) als waagerecht bis leicht steigend vorgegeben werden, während sich der Polpunkt im Bereich der Traktor-Vorderachse vorzugsweise möglichst nah am Boden befinden soll. Bei zapfwellengetriebenen Anbaugeräten kann diese Arbeitslinie vorteilhaft als waagerecht zum Zapfwellenausgang mit einer Soll-Lage des Polpunktes im Bereich des Frontkrafthebers vorgegeben werden.

Der Arbeitspunkt und/oder die Arbeitslinie wird vorzugsweise in Abhängigkeit von mindestens einer der folgenden Größen ermittelt:

- einer Arbeitslänge bzw. Erstreckung des Anbaugerätes entlang einer Längsrichtung des Traktors,

- einer Arbeitsbreite bzw. Erstreckung des Anbaugerätes entlang einer Querrichtung des Traktors,

- einer Arbeitstiefe des Anbaugerätes entlang einer Hochrichtung des Traktors, und

- einer in Längsrichtung des Traktors wirksamen Kraftkomponente, welche an einer dem Traktor zugewandten Kopplungsstelle des Unterlenkers angreift.

Bei einer unmittelbar vor dem Arbeitseinsatz bekannten Arbeitslänge und Arbeitsbreite des Anbaugerätes kann der Arbeitspunkt oder seine Lage verfahrenstechnisch einfach ermittelt werden, wenn vereinfachend ein statischer Zustand des Arbeitspunktes vorausgesetzt wird. Dabei wird der Arbeitspunkt als Schnittpunkt beispielsweise der halben (oder einer anderen) Arbeitsbreite und der halben (oder einer anderen) Arbeitslänge am Anbaugerät definiert. Ausgehend von einem solchen Schnittpunkt kann ein in horizontaler Längsrichtung des Traktors verlaufender Längsabstand zwischen diesem Schnittpunkt und einem Bezugspunkt am Traktor (z.B. traktorseitige Kopplungsstelle eines Unterlenkers) gemessen werden. Ebenso kann ein in horizontaler Querrichtung des Traktors verlaufender Querabstand zwischen diesem Schnittpunkt und dem vorgenannten Bezugspunkt am Traktor gemessen werden. Eine in vertikaler Hochrichtung des Traktors verlaufende Arbeitstiefe kann ebenfalls gemessen werden. Beispielsweise ist diese Arbeitstiefe als ein vertikaler Abstand zwischen einer Kopplungsstelle des Unterlenkers und einer Eingriffstelle des Anbaugerätes (z.B. eines Pflugkörpers eines Pflugs) im Ackerboden definiert. Die gemessenen Daten können in ein geeignetes Steuerungssystem eingegeben und zu Koordinaten bezüglich des vorgenannten Bezugspunktes oder eines anderen Referenzpunktes (z.B Koordinatenursprung eines definierten Koordinatensystems am Traktor) verarbeitet werden. Hierdurch kann auf technisch einfache Weise eine den Zugpunkt mit dem Arbeitspunkt verbindende Arbeitslinie bzw. eine den Polpunkt mit dem Arbeitspunkt verbindende Arbeitslinie ermittelt werden.

Wird ein dynamischer Zustand des Arbeitspunktes vorausgesetzt, kann letzterer und ebenso eine Arbeitslinie zwischen dem Zugpunkt und dem Arbeitspunkt mathematisch einfach und hinreichend genau ermittelt werden, indem zumindest eine in Längsrichtung des Traktors wirksame Kraftkomponente berücksichtigt wird, welche an einer dem Traktor zugewandten Kopplungsstelle des Unterlenkers angreift. Vorzugsweise wird diese Kraftkomponente an beiden Unterlenkern durch geeignete Mittel (z.B. Kraftmessdose) gemessen. Zusätzlich können horizontale Bezugswinkel der Unterlenker bezüglich einer in Längsrichtung des Traktors verlaufenden Bezugsgeraden gemessen werden. Aus diesen Kraftkomponenten und Bezugswinkeln lässt sich eine Kraftresultierende berechnen, welche ausgehend von dem Zugpunkt die Lage der den Zugpunkt mit dem Arbeitspunkt verbindenden Arbeitslinie repräsentiert.

Wie bereits erwähnt, wird die Lage des ausgewählten Wirkpunktes zumindest in Abhängigkeit der geometrischen Lage des oder der Unterlenker ermittelt. Hierbei wird vorzugsweise ein Bezugswinkel herangezogen, den eine Verlängerung bzw. Wirklinie des einzelnen Unterlenkers mit einer Bezugsgeraden einschließt. Auch eine Ermittlung des Arbeitspunktes und/oder einer Arbeitslinie kann in Abhängigkeit von derartigen Bezugswinkeln erfolgen.

Die Bezugsgerade ist insbesondere eine Parallele zu einer Längsrichtung des Traktors. Aus dem jeweiligen Bezugswinkel kann eine Unterlenker-Wirklinie mit einer geometrischen Steigung ermittelt werden. Mit diesen Daten kann z.B. ein Schnittpunkt zwischen beiden Unterlenker-Wirklinien (und somit der Zugpunkt) oder ein Schnittpunkt zwischen einer Unterlenker-Wirklinie und einer Oberlenker-Wirklinie (und somit der Polpunkt) ermittelt bzw. berechnet werden. Der jeweilige Bezugswinkel kann auf unterschiedliche Weise ermittelt oder berechnet werden.

Im Falle des Zugpunktes wird für die Ermittlung des jeweiligen Bezugswinkels in einer bevorzugten Ausführungsform eine Längenmessung an einem längenveränderlichen Seitenstabilisator (z.B. Federelement, Hubzylinder) des Krafthebers durchgeführt. Dieser Seitenstabilisator ist einerseits an einer definierten Stelle des Unterlenkers angelenkt und andererseits an einer definierten traktorseitigen Stabilisator-Kopplungsstelle angelenkt. Der Abstand zwischen der Stabilisator-Kopplungsstelle und der traktorseitigen Unterlenker-Kopplungsstelle ist bekannt, so dass bei durchgeführter Längenmessung an dem Seitenstabilisator über den Kosinussatz die Bezugswinkel ermittelt werden kann. Alternativ können die Bezugswinkel für die Ermittlung des Zugpunktes auch direkt gemessen werden, indem an den traktorseitigen Unterlenker-Kopplungsstellen entsprechende Gestänge und Drehpotentiometer angeordnet sind. Weiter alternativ können an beiden Unterlenkern jeweils Sensormittel (vorzugsweise Inertial- oder Neigungssensor, IMU) für eine Messung von Gierwinkeln angeordnet sein. Diese werden mit einem Gierwinkel verrechnet, der mittels traktorfest angeordneter Sensormittel (vorzugsweise wiederum Inertial- oder Neigungssensor, IMU) als Referenzwert gemessen wird. Hierdurch ergeben sich wiederum die Bezugswinkel beider Unterlenker für die nachfolgende Ermittlung des Zugpunktes. In einer weiteren Ausführungsform können die Bezugswinkel auch durch optische Sensormittel (z.B. eine oder mehrere Kameraeinheiten) festgestellt werden, welche die Unterlenker beobachten.

Für eine Ermittlung des Polpunktes kann beispielsweise eine Unterlenker-Wirklinie und eine Oberlenker-Wirklinie herangezogen werden. Für die Ermittlung des Bezugswinkels zwischen einer Unterlenker-Wirklinie und einer Bezugsgeraden (vorzugsweise parallel zur Längsrichtung des Traktors) wird in einer bevorzugten Ausführungsform eine Messung von Nickwinkeln durchgeführt. Hierzu sind zumindest an einem Unterlenker entsprechende Sensormittel (vorzugsweise Inertial- oder Neigungssensor, IMU) angeordnet, deren gemessener Nickwinkel mit einem Nickwinkel verrechnet wird, der mittels traktorfest angeordneter Sensormittel (vorzugsweise wiederum Inertial- oder Neigungssensor, IMU) als Referenzwert gemessen wird. Alternativ kann der jeweilige Bezugswinkel des Unterlenkers auch gemessen werden, indem beispielsweise im Bereich der traktorseitigen Unterlenker-Kopplungsstellen entsprechende Gestänge und Drehpotentiometer angeordnet sind. Die Oberlenker-Wirklinie kann bereitgestellt werden, indem der Oberlenker-Winkel zwischen dem Oberlenker und einer Bezugsgeraden (vorzugsweise parallel zur Längsrichtung des Traktors) ermittelt wird. Hierzu können entsprechende Sensormittel (vorzugsweise Inertial- oder Neigungssensor) am Oberlenker angeordnet sein.

Vorzugsweise wird für eine eindeutige Ermittlung des Wirkpunktes bzw. seiner aktuellen Lage oder auch seiner Soll-Lage ein Koordinatensystem definiert. Dessen Koordinatenursprung oder Nullpunkt entspricht einem definierten Referenzpunkt, insbesondere einem Mittelpunkt der Hinterachse des Traktors. Dabei schneiden sich vorzugsweise eine x-Achse, eine y-Achse und eine z-Achse in dem Koordinatenursprung. Die x-Achse verläuft insbesondere parallel zu einer Längsrichtung bzw. einer Fahrzeug-Horizontalen des Traktors. Die y-Achse verläuft insbesondere parallel zu einer Querrichtung bzw. einer Fahrzeug-Horizontalen des Traktors. Die z-Achse verläuft insbesondere parallel zu einer Hochrichtung bzw. einer Fahrzeug-Vertikalen des Traktors. Mit diesem Koordinatensystem lassen sich die Lage des jeweiligen Wirkpunktes, die Lage des Arbeitspunktes am Anbaugerät als auch die Lage einer den Wirkpunkt mit dem Arbeitspunkt verbindenden Arbeitslinie mathematisch einfach mit einem eindeutigen Referenzpunkt ermitteln und definieren.

Um den Zugpunkt geometrisch möglichst genau verstellen zu können, wird vorzugsweise ein Relativabstand zwischen den dem Traktor zugewandten Kopplungsstellen der beiden Unterlenker verändert. Hierbei sind die beiden Unterlenker vorzugsweise jeweils über einen Seitenstabilisator mit der Traktor-Tragstruktur beweglich verbunden. Die Kopplungsstelle zwischen dem Seitenstabilisator und dem Unterlenker liegt dabei entlang der Länge des Unterlenkers zwischen dessen beiden Kopplungsstellen.

In einer bevorzugten Ausführungsform sind die dem Traktor zugewandten Kopplungsstellen des Unterlenkers mit Antriebsmitteln gekoppelt, welche zur Veränderung des Relativabstandes zwischen diesen beiden Kopplungsstellen ansteuerbar sind. Hierdurch kann eine technisch einfache Bewegungssteuerung der Unterlenker relativ zueinander bereitgestellt werden. Die Antriebsmittel (z.B. Hydraulikzylinder, Elektromotor) sind vorzugsweise über eine Kopplungsvorrichtung (z.B. eine Kinematik oder kinematische Kette) mit dem oder den Unterlenker(n) beweglich gekoppelt.

Um den Polpunkt mit geringem technischen Aufwand verstellen zu können, wird vorzugsweise die Lage des Oberlenkers relativ zu einer Bezugsgeraden verändert. Dabei ist die Bezugsgerade insbesondere parallel zu einer Längsrichtung bzw. einer Fahrzeug-Horizontalen des Traktors ausgerichtet. Der Polpunkt kann dann technisch einfach in Abhängigkeit von einer Änderung eines Kopplungsabstandes zwischen der Bezugsgeraden und der dem Traktor zugewandten Kopplungsstelle des Oberlenkers verstellt werden. In einer bevorzugten Ausführungsform wird in der jeweiligen Lage des Oberlenkers ein Oberlenker-Winkel zwischen der Bezugsgeraden und einer Oberlenker-Wirklinie und daraus eine geometrische Steigung der Oberlenker-Wirklinie ermittelt. Diese Daten können dann in einem definierten Koordinatensystem mit einer Unterlenker-Wirklinie in Beziehung gesetzt werden, um den Schnittpunkt der Oberlenker-Wirklinie und der Unterlenker-Wirklinie als Polpunkt zu ermitteln.

In einer bevorzugten Ausführungsform ist die dem Traktor zugewandte Kopplungsstelle des Oberlenkers mit einer Antriebseinheit gekoppelt, welche zur Veränderung des Kopplungsabstandes ansteuerbar ist. Hierdurch kann eine technisch einfache Bewegungssteuerung des Oberlenkers bereitgestellt werden. Die Antriebseinheit ist beispielsweise als ein ansteuerbarer Hydraulikzylinder oder Elektromotor ausgebildet.

Das erfindungsgemäße Verfahren wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Einzelne Details sind nicht notwendigerweise maßstäblich zueinander dargestellt. Es zeigen:

Fig. 1    ein Blockschaltbild mit einer schematisch dargestellten Anordnung mit Bestandteilen zur Durchführung des erfindungsgemäßen Verfahrens,

Fig. 2    eine Draufsicht einer schematisch dargestellten Traktor-Anbaugerät-Kombination,

Fig. 3    eine Seitenansicht der Traktor-Anbaugerät-Kombination gemäß Fig.2,

Fig. 4    eine schematische Draufsicht eines teilweise dargestellten Krafthebers eines Traktors,

Fig. 5    eine schematische Draufsicht eines Traktors mit geometrischen Details zur Ermittlung des Zugpunktes,

Fig. 6A   eine schematische Draufsicht eines teilweise dargestellten Krafthebers mit daran angreifenden Kraftkomponenten,

Fig. 6B   die Draufsicht gemäß Fig. 6A mit einer anderen Kraftbelastung des Krafthebers,

Fig. 7          eine schematische Draufsicht eines Traktors mit geometrischen Details im Zusammenhang mit einer Arbeitslinie zwischen dem Zugpunkt und dem Arbeitspunkt,

Fig. 8          eine Draufsicht einer Ausführungsform eines Krafthebers mit zwei Unterlenkern,

Fig. 9A bis Fig. 9C          eine vergrößerte Darstellung des Details IX gemäß Fig. 8, mit Kopplungsmitteln zur Veränderung des Relativabstandes zwischen den beiden Unterlenkern in unterschiedlichen Relativpositionen,

Fig. 10          Kopplungsmittel zur Veränderung des Relativabstandes zwischen den beiden Unterlenkern in einer weiteren Ausführungsform,

Fig. 11A und Fig. 11B          eine Draufsicht eines Traktors mit zwei unterschiedlichen Lagen des Zugpunktes,

Fig. 12          eine perspektivische Teildarstellung eines an eine Tragstruktur eines Traktors angelenkten Oberlenkers,

Fig. 13          eine perspektivische Darstellung eines bewegbaren Lagerblockes zur Anlenkung des Oberlenkers,

Fig. 14A und Fig. 14B          eine schematische Seitenansicht des Lagerblockes gemäß Fig. 13 in zwei unterschiedlichen Positionen, und

Fig. 15A und Fig. 15B          eine Seitenansicht der Tragstruktur eines Traktors mit zwei unterschiedlichen Lagen des Polpunktes.

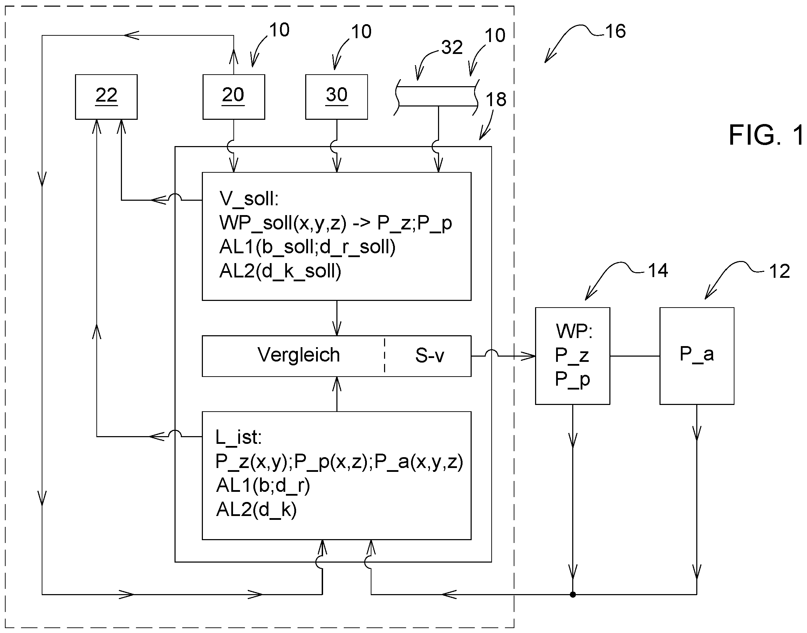

Fig. 1 zeigt eine Anordnung 10 mit mehreren Bestandteilen zur Steuerung des Arbeitsbetriebs eines Anbaugerätes 12. Das Anbaugerät 12 ist über einen Kraftheber 14 an einen Traktor 16 gekoppelt. Die Anordnung 10 ist zumindest teilweise und insbesondere vollständig traktorseitig angeordnet. Sie weist eine Steuereinheit 18 auf, welche die für eine Signalverarbeitung erforderlichen Teileinheiten wie etwa Lese- und/oder Schreibeinheit, Speichereinheit, Prozessor enthält. Die Steuereinheit 18 kann physisch voneinander getrennte Teileinheiten aufweisen oder als ein einziger Block am Traktor 16 angeordnet sein.

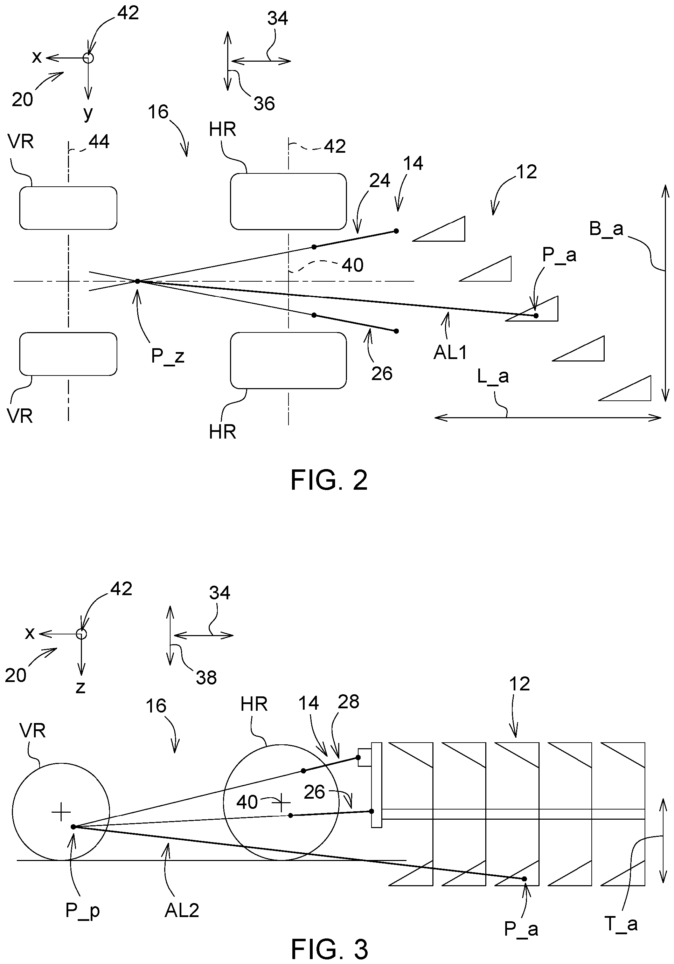

Die Steuereinheit 18 empfängt als Daten beispielsweise Sensorsignale von dem Kraftheber 14 und/oder dem Anbaugerät 12 und/oder Dateninformationen des Fahrers bzw. Nutzers über eine Benutzerschnittstelle 20. Aus den empfangenen Daten ermittelt die Steuereinheit 18 u.a. die aktuelle Lage $L\_ist$ zweier noch zu erläuternder Wirkpunkte WP, nämlich eines Zugpunktes $P\_z$ und eines Polpunktes $P\_p$. Die aktuelle Lage $L\_ist$ wird vorzugsweise in Form von Koordinaten x, y, z eines definierten Koordinatensystems 20 ermittelt (Fig. 2, Fig. 3). Außerdem kann die aktuelle Lage $L\_ist$ eines dem Anbaugerät 12 zugeordneten Arbeitspunktes $P\_a$ ermittelt werden.

Alternativ kann die aktuelle Lage $L\_ist$ des Arbeitspunktes $P\_a$ vor oder während des Arbeitseinsatzes des Anbaugerätes 12 ermittelt werden, indem spezifische geometrische Abmessungen des Anbaugerätes, spezifische geometrische Abstände zwischen dem Traktor und dem Anbaugerät sowie spezifische Abstände zwischen dem Anbaugerät und dem zu bearbeitenden Erdboden vom Fahrer bzw. Benutzer gemessen und über die Benutzerschnittstelle 20 an die Steuereinheit 18 gesendet werden. Aus den gesendeten Daten kann die Steuereinheit 18 dann die aktuelle Lage $L\_ist$ des Arbeitspunktes $P\_a$ ermitteln.

Die ermittelte Lage $L\_ist$ des Wirkpunktes WP, d.h. $P\_z$ oder $P\_p$ und des Arbeitspunktes $P\_a$ kann dem Fahrer über eine Anzeigeeinheit 22 des Traktors 16 signalisiert werden. Zudem kann die ermittelte Lage $L\_ist$ des Wirkpunktes WP abhängig von dem Ergebnis eines Vergleichs mit einer Soll-Vorgabe $V\_soll$ automatisch verstellt werden. Die Soll-Vorgabe $V\_soll$ ist beispielsweise eine Soll-Lage $WP\_soll$ des ausgewählten Wirkpunktes WP oder eine Soll-Lage einer Arbeitslinie AL1 oder AL2. Die Soll-Vorgabe $V\_soll$ wird im Rahmen eines Algorithmus mit der aktuellen Lage $L\_ist$ verglichen. Abhängig von dem Vergleichsergebnis können in der Steuereinheit 18 Verstellsignale $S\_v$ generiert werden, welche den Kraftheber 14 bzw. dessen zwei Unterlenker 24, 26 und/oder dessen Oberlenker 28 zu deren Verstellung ansteuern. Diese Verstellung des Krafthebers 14 kann somit eine automatische Umsetzung einer Soll-Vorgabe bewirken.

Die Soll-Vorgabe $V\_soll$ kann z.B. vom Fahrer bzw. Benutzer über die Benutzerschnittstelle 20 vorgegeben werden. Alternativ kann die Soll-Vorgabe $V\_soll$ über ein traktorseitiges Steuergerät 30 oder ein Bussystem 32 des Traktors 16 automatisch definiert werden. Die jeweilige Soll-Vorgabe $V\_soll$ kann optional an der Anzeigeeinheit 22 signalisiert werden. Der Fahrer oder Benutzer kann dann Soll-Vorgaben komfortabel erkennen und ggf. auch sehr präzise ändern.

Die Darstellung der aktuellen Lagen $L\_ist$ und der Soll-Lagen mittels der Soll-Vorgabe $V\_soll$ an der Anzeigeeinheit 22 ist vorzugsweise ähnlich der Darstellung in Fig. 2 und Fig. 3, so dass der Benutzer einen guten Überblick über die aktuelle Lage und Veränderungen des ausgewählten Wirkpunktes WP, des Arbeitspunktes P_a sowie der Arbeitslinien AL1 und AL2 hat.

Zur Ermittlung des Wirkpunktes WP, des Arbeitspunktes P_a und der Arbeitslinien AL1, AL2 ist das bereits erwähnte Koordinatensystem 20 definiert, welches anhand von Fig. 2 und Fig. 3 gut erkennbar ist. Das Koordinatensystem 20 weist eine x-Achse, eine y-Achse und eine z-Achse auf. Die x-Achse verläuft parallel zu einer Längsrichtung 34 des Traktors 16, insbesondere einer Fahrzeug-Horizontalen. Die y-Achse verläuft parallel zu einer Querrichtung 36 des Traktors 16, insbesondere einer weiteren Fahrzeug-Horizontalen. Die z-Achse verläuft parallel zu einer Hochrichtung 38 des Traktors 16, insbesondere einer Fahrzeug-Vertikalen. Die drei genannten Achsen schneiden sich in einem Koordinatenursprung 40 bzw. Nullpunkt, der einem Referenzpunkt für die Lage der Wirkpunkte WP, des Arbeitspunktes P_a und der Arbeitslinien AL1, AL2 entspricht. Wie in Fig. 2 und Fig. 3 erkennbar, entspricht dieser Referenzpunkt einem Mittelpunkt einer Hinterachse 42 des Traktors 16.

Weiterhin ist Fig. 2 und Fig. 3 entnehmbar, dass bei dem dort dargestellten Arbeitseinsatz sich die Lage sowohl des Zugpunktes P_z als auch des Polpunktes P_p entlang der Längsrichtung 34 zwischen der Hinterachse 42 mit zwei Hinterrädern HR und einer Vorderachse 44 mit zwei Vorderrädern VR des Traktors 16 befindet. Während die erste Arbeitslinie AL1 den Zugpunkt P_z mit dem Arbeitspunkt P_a verbindet (Fig. 2), verbindet die zweite Arbeitslinie AL2 den Polpunkt P_p mit dem Arbeitspunkt P_a (Fig. 3). Die erste Arbeitslinie AL1 liegt in einer durch die Längsrichtung 34 und die Querrichtung 36 aufgespannten Ebene ein. Die zweite Arbeitslinie AL2 liegt in einer durch die Längsrichtung 34 und die Hochrichtung 38 aufgespannten Ebene ein.

Der Zugpunkt P_z ist der geometrische Schnittpunkt gedachter Verlängerungen der beiden Unterlenker 24, 26 (Fig. 2). Der Polpunkt P_p ist der geometrische Schnittpunkt gedachter Verlängerungen des Oberlenkers 28 und eines Unterlenkers 24 oder 26.

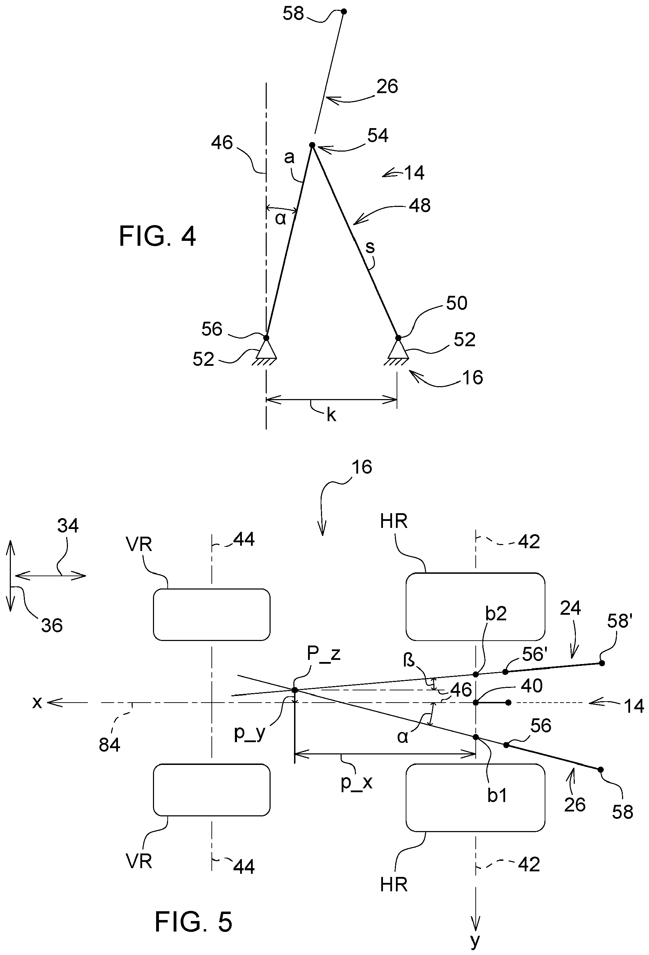

Anhand von Fig. 4 und Fig. 5 wird erläutert, wie der Zugpunkt P_z mit geringem technischen Aufwand in Abhängigkeit von zwei Bezugswinkeln $\alpha$, $\beta$ technisch einfach ermittelt werden kann. Dabei bilden eine gedachte Verlängerung des jeweiligen Unterlenkers 24, 26 und eine parallel zur Längsrichtung 34 verlaufende Bezugsgerade 46 die Winkelschenkel dieser Bezugswinkel $\alpha$, $\beta$. Die Ermittlung der Bezugswinkel $\alpha$, $\beta$ ist dann besonders einfach, wenn am Kraftheber 14 Seitenstabilisatoren 48 vorhanden sind, deren Längen s gemessen werden können. Für diese Längenmessung ist ein geeignetes Messsystem vorzugsweise am Seitenstabilisator selbst angeordnet. Der Seitenstabilisator 48 ist mit einem dem Traktor 16 zugewandten Kopplungspunkt 50 an eine Tragstruktur 52 des Traktors 16 beweglich gekoppelt. Über einen dem Kopplungspunkt 50 gegenüberliegenden Anlenkpunkt 54 ist der Seitenstabilisator 48 mit dem Unterlenker 26 gelenkig verbunden. Dieser Anlenkpunkt 54 befindet sich zwischen einer dem Traktor 16 zugewandten Kopplungsstelle 56 und einer dem Anbaugerät 12 zugewandten Kopplungsstelle 58 des Unterlenkers 26. Die Strecke a zwischen der Kopplungsstelle 56 und dem Anlenkpunkt 54 ist bekannt. Die Strecke k zwischen dem Kopplungspunkt 50 und der Kopplungsstelle 56 ist ebenfalls bekannt. Die Länge s des Seitenstabilisators 48 kann gemessen werden. Somit kann der Bezugswinkel $\alpha$ aus der Gleichung

$$\sin \alpha = (a^2 + k^2 - s^2)/2ak$$

ermittelt werden. Für den Unterlenker 24 mit seinen Kopplungsstellen 56', 58' und den zugehörigen Bezugswinkel $\beta$ kann die vorgenannte Gleichung entsprechend angewendet werden.

Sind die Werte der Bezugswinkel $\alpha$, $\beta$ bekannt, können auch die vom Koordinatenursprung 40 ausgehenden und entlang der Querrichtung 36 verlaufenden Abstände b1 und b2 zu den gedachten Verlängerungen der Unterlenker 24, 26 berechnet werden. Aus den Bezugswinkeln $\alpha$, $\beta$ und den Abständen b1, b2 ergeben sich die x-Koordinate p_x und die y-Koordinate p_y des Zugpunktes P_z wie folgt:

$$p\_x = (b2 - b1)/(\tan \alpha - \tan \beta),$$

und

$$p\_y = (\tan \alpha \cdot p\_x) + b1.$$

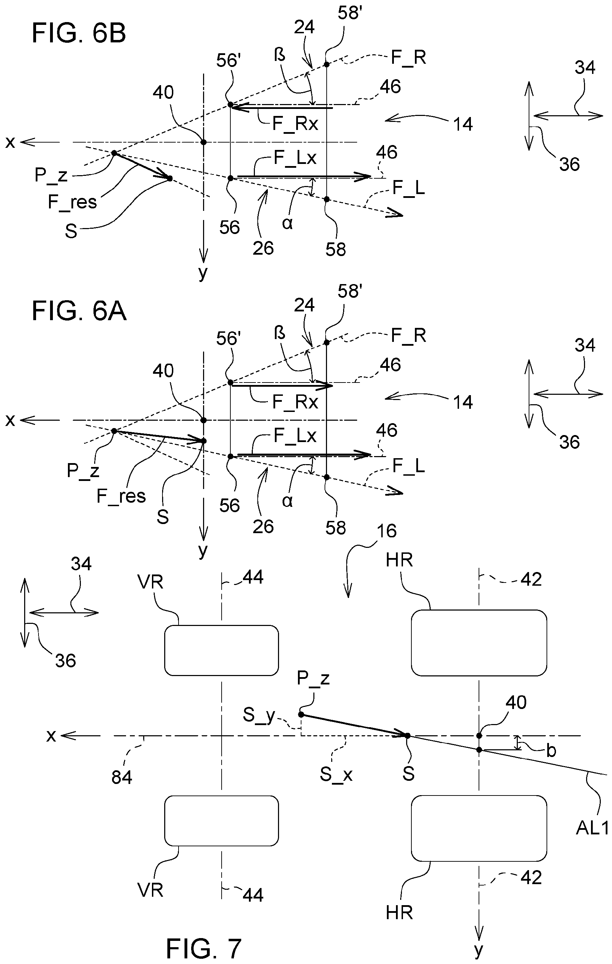

Ausgehend von den berechneten Bezugswinkeln $\alpha$, $\beta$ und dem ermittelten Zugpunkt P_z lässt sich auch technisch einfach die zugehörige, in einer Horizontalebene einliegende Arbeitslinie AL1 ermitteln, ohne dass vorher die exakte Lage des Arbeitspunktes P_a bekannt sein muss. Hierzu werden mittels eines geeigneten Messsystems an den Kopplungsstellen 56, 56' der Unterlenker 24, 26 angreifende Kräfte gemessen. Vorzugsweise ist das Messsystem (z. B. Dehnungsmessstreifen) im Bereich der Kopplungsstellen 56, 56' integriert. Vorteilhaft ist bereits die Messung der Kraftkomponenten F_Lx und F_Rx parallel zur Längsrichtung 34 bzw. parallel zur x-Achse des Koordinatensystems 20 ausreichend, um danach die Arbeitslinie AL1 zu ermitteln (Fig. 6A, Fig. 6B).

In Fig. 6A sind die beiden Unterlenker 24, 26 auf Zug belastet. Aus den gemessenen Kraftkomponenten F_Lx und F_Rx entlang der x-Achse und den bereits ermittelten Bezugswinkeln $\alpha$, $\beta$ lassen sich die beiden Kräfte F_L (= F_Lx • cos a), F_R (= F_Rx • cos $\beta$) und daraus die Kraftresultierende F_res berechnen. Da der Zugpunkt P_z als Schnittpunkt der Unterlenker-Verlängerungen bereits bekannt ist, kann auch der Vektorpunkt S ermittelt werden.

Die Kraftresultierende F_res gemäß Fig. 6B wird analog zur Beschreibung in Fig. 6A ermittelt, wobei bei der Ausführungsform gemäß Fig. 6B der Unterlenker 26 auf Zug und der Unterlenker 24 auf Druck belastet ist.

Ausgehend von den ermittelten Punkten P_z und S kann die Zuglinie AL1 ermittelt werden, da der Arbeitspunkt P_a - in der Horizontalebene gemäß Fig. 7 gesehen - immer auf dieser durch die Kraftresultierende F_res vorgegebenen Arbeitslinie AL1 liegt. Die Steigung dieser Arbeitslinie AL1 kann erforderlichenfalls über die Differenz der x-Koordinaten und y-Koordinaten der Punkte P_z und S, d.h. über S_y und S_x ermittelt werden. Weiterhin kann der in Querrichtung 36 verlaufende Linienabstand b zwischen der Arbeitslinie AL1 und dem Koordinatenursprung 40 bzw. definierten Mittelpunkt der Hinterachse 42 berechnet ermittelt werden. Der jeweilige aktuelle Wert des Linienabstandes b kann über die Anzeigeeinheit 22 signalisiert werden. Ist b = 0, dann verläuft die Arbeitslinie AL1 durch den Mittelpunkt der Hinterachse 42, so dass die Traktor-Anbaugerät-Kombination keinen Seitenzug bzw. kein Giermoment aufweist. Eine an den jeweiligen Arbeitseinsatz angepasste Optimierung der Zuglinie AL1 kann durch Variieren des Linienabstands b bzw. durch eine entsprechende Änderung der Lage des Zugpunktes P_z erreicht werden. Hierzu kann in der Steuereinheit 18 eine Soll-Vorgabe V_soll beispielsweise in Form eines Soll-Wertes b_soll des Linienabstands b oder in Form der bereits erwähnten Soll-Lage WP_soll des Zugpunktes P_z vorgegeben werden. Der Soll-Wert b_soll kann dabei optional auch als eine die Soll-Steigung der Arbeitslinie AL1 repräsentierende Größe behandelt werden.

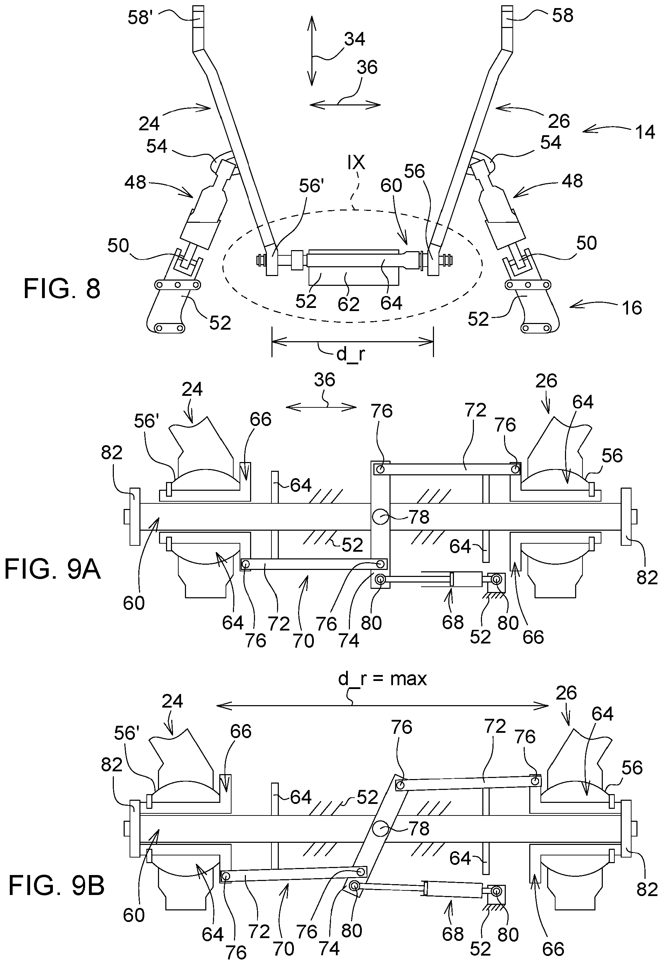

Wie bereits erläutert, ist die Lage des Zugpunktes P_z von der Lage der beiden Unterlenker 24, 26 abhängig. Dabei geht es um die Relativlage beider Unterlenker 24, 26 in einer durch die Längsrichtung 34 und die Querrichtung 36 aufgespannten Horizontalebene. Diese Relativlage kann durch einen Relativabstand d_r zwischen den beiden Kopplungsstellen 56 und 56' repräsentiert werden (Fig. 8).

Gemäß Fig. 8 sind die beiden Kopplungsstellen 56, 56' an einander abgewandten Abschnitten einer Lagerwelle 60 gelagert. Die Lagerwelle 60 wiederum ist an der Tragstruktur 52 gelagert. Hierzu weist eine plattenartige Lagerbasis 62 zwei Lagerstege 64 auf, welche die Lagerwelle 60 tragen. Die Lagerbasis 62 kann mit der Tragstruktur 52 fest verbunden sein oder einstückiger Bestandteil der Tragstruktur 52 sein.

In Fig. 9A ist die Lagerung der Unterlenker 24, 26 detaillierter erkennbar. Deren Kopplungsstellen 56, 56' sind jeweils über ein Kugellager 64 und eine das Kugellager 64 durchsetzende Lagerhülse 66 mit der Lagerwelle 60 beweglich verbunden. Außerdem sind die Kopplungsstellen 56, 56' mit Antriebsmitteln 68 gekoppelt, welche zur Veränderung des Relativabstandes d_r ansteuerbar sind. In Fig. 9A sind die Antriebsmittel 68 als ein Hydraulikzylinder ausgebildet, welcher durch entsprechende Verstellsignale S_v der Steuereinheit 18 ansteuerbar ist. Zur Kopplung der Kopplungsstellen 56, 56' mit den Antriebsmitteln 68 sind Kopplungsmittel 70 vorgesehen, welche unterschiedlich ausgebildet sein können. Dabei können die Lagerhülsen 66 auch als Bestandteil der Kopplungsmittel 70 betrachtet werden. Die Lagerhülsen 66 sind jeweils über einen Kopplungssteg 72 mit einem Kopplungslenker 74, insbesondere mittels entsprechender Gelenkachsen 76, beweglich gelagert. Über eine Lenkerachse 78 ist der Kopplungslenker 74 an der Lagerwelle 60 gelenkig gelagert. Die in Fig. 9A dargestellten Antriebsmittel 68 sind über Gelenkachsen 80 einerseits mit dem Kopplungslenker 74 und andererseits mit der Tragstruktur 52 beweglich verbunden.

In weiteren Ausführungsformen können die Antriebsmittel 68 gemäß Fig. 9A beispielsweise als ein Elektromotor (z.B. Linear- oder Schrittmotor) ausgebildet sein, welcher dann die zumindest bei dieser Ausführungsform mit dem Kopplungslenker 74 fest verbundene Lenkerachse 78 antreibt. In diesem Fall ist die Gelenkachse 80 am Kopplungslenker 74 überflüssig.

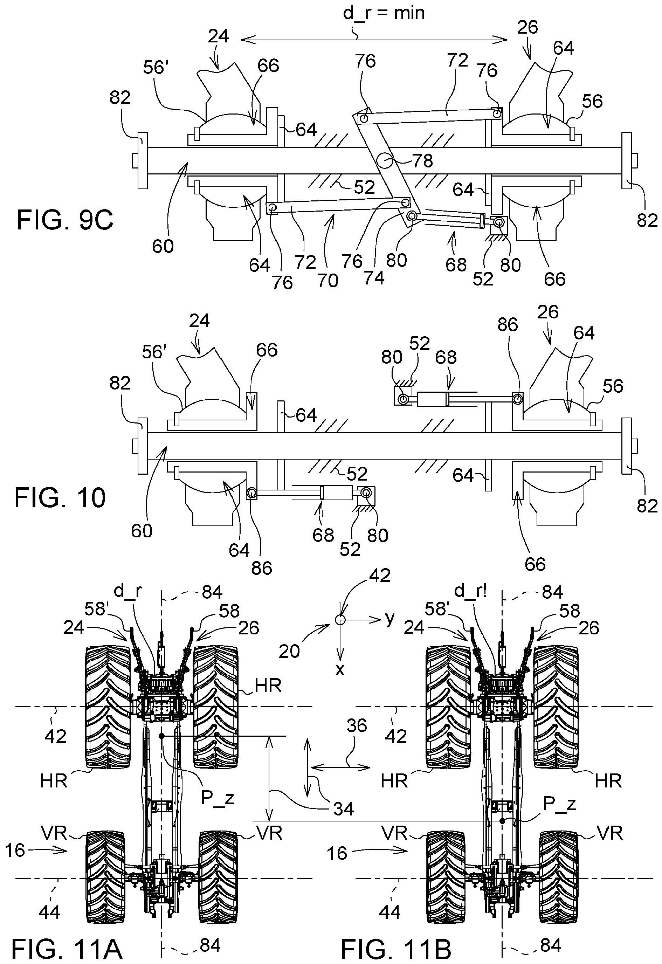

Unabhängig von ihrer Ausgestaltung können die Antriebsmittel 68 über die Steuereinheit 18 angesteuert werden, um den Relativabstand d_r zwischen einer maximalen Länge (Fig. 9B) und einer minimalen Länge (Fig. 9C) zu ändern. Hierbei ist die Axialbeweglichkeit der Lagerhülsen 66 einerseits durch die Lagerstege 64 (Fig.9C) und andererseits durch an der Lagerwelle 60 angeordnete Endanschläge 82 (Fig. 9B) begrenzt.

In der Steuereinheit 18 kann eine Soll-Vorgabe V_soll beispielsweise in Form eines Soll-Wertes d_r_soll des Relativabstandes d_r vorgegeben werden, um den Zugpunkt P_z und somit auch die Arbeitslinie AL1 zu verstellen. Der Soll-Wert d_r_soll kann dabei optional auch als eine die Soll-Steigung der Arbeitslinie AL1 repräsentierende Größe behandelt werden.

Der jeweilige Relativabstand d_r wird z.B. als Sensorsignal an die Steuereinheit 18 gesendet. Hierbei kann ein mit der Lenkerachse 78 zusammenwirkender Drehratensensor verwendet werden. Die Sensorsignale können auch eine Information über die aktuelle Lage des Zugpunktes P_z enthalten, da die Lage des Zugpunktes P_z von dem Relativabstand d_r abhängt.

Sofern die verwendeten Antriebsmittel 68 und Kopplungsmittel 70 eine spiegelsymmetrische Veränderung der Relativlage beider Unterlenker 24, 26 zulassen (Fig. 9A bis Fig. 9C), kann der Zugpunkt P_z in einer spezifischen Ausführungsform nur entlang der x-Koordinate bzw. entlang der Längsrichtung 34 verstellt werden. Bei symmetrischer Anordnung der Unterlenker 24, 26 bezüglich einer Mittellängsachse 84 und konstantem Abstand der beiden dem Anbaugerät 12 zugewandten Kopplungsstellen 58, 58' zueinander in Querrichtung 36 bedeutet dies, dass der Zugpunkt P_z nur entlang dieser Mittellängsachse 84 in Längsrichtung 34 verstellbar ist. Dabei entspricht die Lage des Zugpunktes P_z in Fig. 11A dem minimalen Relativabstand d_r. Die Lage des Zugpunktes P_z in Fig. 11B entspricht dem maximalen Relativabstand d_r.

In Fig. 10 weisen die Antriebsmittel 68 zwei separate Hydraulikzylinder auf, welche jeweils unmittelbar über eine Gelenkachse 86 mit einer Lagerhülse 66 beweglich verbunden sind. Hierdurch können beide Unterlenker 24, 26 unabhängig voneinander verstellt werden. Entsprechend kann der Zugpunkt P_z hinsichtlich seiner x-Koordinate und seiner y-Koordinate verstellt werden.

Wie bereits erläutert, ist die Lage des Polpunktes P_p von der Lage des Oberlenkers 28 relativ zu einem oder beiden Unterlenkern 24, 26 abhängig. Dabei geht es um die Relativlage in einer durch die Längsrichtung 34 und die Hochrichtung 38 aufgespannten Vertikalebene. Diese Relativlage kann durch eine unterschiedliche Position des Oberlenkers 28 bezüglich einer parallel zur Längsrichtung 34 verlaufenden horizontalen Bezugsgeraden 88 verändert werden.

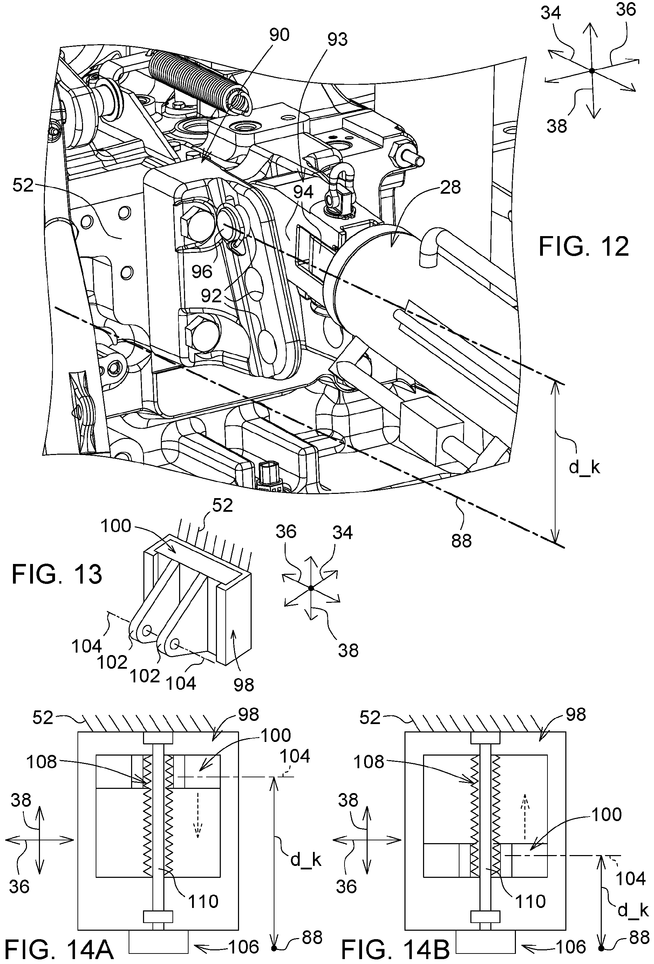

Für diese unterschiedliche Position oder Lage des Oberlenkers 28 kann herkömmlich eine mit der Tragstruktur 52 fest verbundene (z.B. verschraubter) Anlenkstelle 90 mit drei entlang der Hochrichtung 38 unterschiedlich positionierten Lagerbuchsen 92 verwendet werden (Fig. 12). Dabei weist die der traktorseitigen Anlenkstelle 90 zugewandte Kopplungsstelle 93 des Oberlenkers 28 ein Kreuzgelenk 94 auf, welches an der ausgewählten Lagerbuchse 92 angeordnet von einem korrespondierenden Lagerbolzen 96 durchsetzt ist. Hierdurch ist der Oberlenker 28 an der Anlenkstelle 90 schwenkbeweglich gekoppelt. Für eine Positionsänderung des Oberlenkers 28 muss herkömmlich dessen dem Traktor 16 zugewandte Kopplungsstelle 93 bzw. Kreuzgelenk 94 mit einer anderen vorhandenen Lagerbuchse 92 manuell verbunden werden.

Diese herkömmliche manuelle Positionsänderung wird nun durch eine in Hochrichtung 38 verfahrbare Kopplungsstelle 93 des Oberlenkers 28 ersetzt (Fig. 13, Fig. 14A, Fig. 14B). Hierzu trägt die Tragstruktur 52 des Traktors 16 ein schachtartiges Rahmenteil 98, welches etwa formschlüssig einen Lagerblock 100 aufnimmt. Zwei parallele Ausleger 102 dienen im Bereich einer Schwenkachse 104 der schwenkbeweglichen Aufnahme der Kopplungsstelle 93 des Oberlenkers 28.

Entlang der Hochrichtung 38 ist der Lagerblock 100 und somit auch der daran angelenkte Oberlenker 28 relativ zum Rahmenteil 98 beweglich. Für diese Translationsbewegung ist eine Antriebseinheit 106 (z.B. Linear- oder Schrittmotor, Hydraulikzylinder) vorgesehen, dessen Antriebsbewegung auf den Lagerblock 100 übertragen wird (Fig. 14A, Fig. 14B). Hierzu ist beispielsweise ein Spindelantrieb 108 vorgesehen, dessen Spindelstange 110 von der Antriebseinheit angetrieben wird. Die Spindelstange 110 wirkt mit dem Lagerblock 100 zusammen und kann letzteren entlang der Hochrichtung 38 verfahren.

Auf diese Weise kann die Steuereinheit 18 Verstellsignale S_v generieren, mit denen die Antriebseinheit 106 ansteuerbar ist. Mit dieser Ansteuerung kann der Lagerblock 100 entlang der Hochrichtung 38 zwischen einer oberen Position (Fig. 14A) und einer unteren Position (Fig. 14B) verfahren werden. Hierdurch kann ein Kopplungsabstand d_k zwischen der Bezugsgeraden 88 und der Kopplungsstelle 93 kontinuierlich und automatisch geändert werden. Der Kopplungsabstand d_k ist in Fig. 14A am größten und in Fig. 14B am kleinsten.

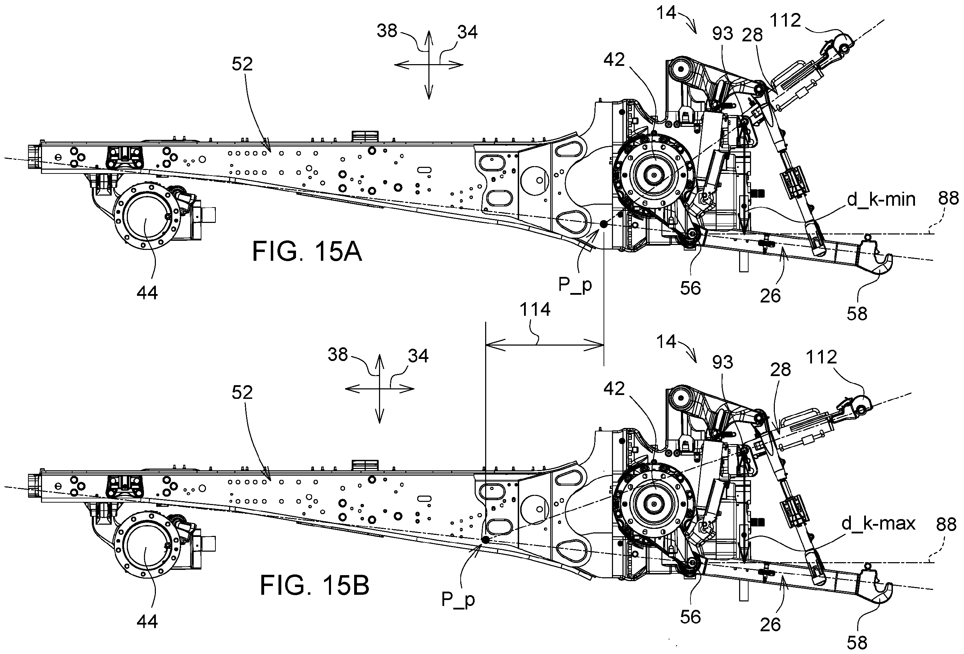

Die Verstellung des Polpunktes P_p aufgrund eines geänderten Kopplungsabstandes d_k ist in Fig. 15A und Fig. 15B erkennbar. Der Abstand in Hochrichtung 38 zwischen der Kopplungsstelle 58 des Unterlenkers 26 und einer dem Anbaugerät 12 zugewandten Kopplungsstelle 112 ist konstant. Bei minimalem Kopplungsabstand d_k-min liegt der Polpunkt P_p nahe der Hinterachse 42, während bei maximalem Kopplungsabstand d_k-max der Polpunkt P_p entlang der Längsrichtung 34 um eine Strecke 114 in Richtung der Vorderachse 44 verstellt worden ist. Hierdurch sind die x-Koordinate und die z-Koordinate des Polpunktes P_p verstellbar.

In der Steuereinheit 18 kann eine Soll-Vorgabe V_soll beispielsweise in Form eines Soll-Wertes d_k_soll des Kopplungsabstandes d_k vorgegeben werden, um den Polpunkt P_p und somit auch die Arbeitslinie AL2 zu verstellen. Der Soll-Wert d_k_soll kann dabei optional auch als eine die Soll-Steigung der Arbeitslinie AL2 repräsentierende Größe behandelt werden.

**Patentansprüche**

1.  Verfahren zur Steuerung des Betriebs eines Anbaugerätes (12), welches über einen Oberlenker (28) und zwei Unterlenker (24, 26) eines Krafthebers (14) an einen Traktor (16) gekoppelt ist,

    - wobei ein Wirkpunkt (WP) unter mindestens folgenden geometrischen Punkten am Traktor (16) ausgewählt wird:

-- ein Zugpunkt (P_z) als geometrischer Schnittpunkt gedachter Verlängerungen beider Unterlenker (24, 26),
-- ein Polpunkt (P_p) als geometrischer Schnittpunkt gedachter Verlängerungen des Oberlenkers (28) und eines Unterlenkers (24, 26),

- wobei eine Lage (L_ist) des ausgewählten Wirkpunktes (WP) ermittelt wird, und
- wobei die ermittelte Lage (L_ist) des Wirkpunktes (WP)

-- über eine Anzeigeeinheit (22) signalisiert wird, und/oder
-- abhängig von einem Vergleich mit einer Soll-Vorgabe (V_soll) verstellt wird.

2.  Verfahren nach Anspruch 1, **dadurch gekennzeichnet, dass** die Ermittlung der Lage (L_ist) des Wirkpunktes (WP) eine Ermittlung einer Arbeitslinie (AL1, AL2) beinhaltet, welche den Wirkpunkt (WP) mit einem Arbeitspunkt (P_a) des Anbaugerätes (12) verbindet.

3.  Verfahren nach Anspruch 2, **dadurch gekennzeichnet, dass** die Arbeitslinie (AL1) den Zugpunkt (P_z) mit dem Arbeitspunkt (P_a) verbindet und in einer durch eine Querrichtung (36) und eine Längsrichtung (34) des Traktors (16) aufgespannten Ebene einliegt.

4.  Verfahren nach Anspruch 2, **dadurch gekennzeichnet, dass** die Arbeitslinie (AL2) den Polpunkt (P_p) mit dem Arbeitspunkt (P_a)) verbindet und in einer durch eine Hochrichtung (38) und eine Längsrichtung (34) des Traktors (16) aufgespannten Ebene einliegt.

5.  Verfahren nach einem der vorhergehenden Ansprüche,
**dadurch gekennzeichnet, dass** die Soll-Vorgabe (V_soll)

- eine Soll-Lage (WP_soll) des Wirkpunktes (WP) aufweist, und/oder
- eine Soll-Lage (b_soll, m1_soll, m2_soll) einer den Wirkpunkt (WP) mit einem Arbeitspunkt (P_a) des Anbaugerätes (12) verbindenden Arbeitslinie (AL1, AL2) aufweist.

6.  Verfahren nach einem der Ansprüche 2 bis 5, **dadurch gekennzeichnet, dass** der Arbeitspunkt (P_a) und/oder die Arbeitslinie (AL1) in Abhängigkeit von mindestens einer der folgenden Größen ermittelt wird:

- einer Arbeitslänge (L_a) des Anbaugerätes (12) entlang einer Längsrichtung (34) des Traktors (16),
- einer Arbeitsbreite (L_b) des Anbaugerätes (12) entlang einer Querrichtung (36) des Traktors (16),
- einer Arbeitstiefe (T_a) des Anbaugerätes (12) entlang einer Hochrichtung (38) des Traktors (16),
- einer in Längsrichtung (34) des Traktors (16) wirksamen Kraftkomponente (F_Lx, F_Rx), welche an einer dem Traktor (16) zugewandten Kopplungsstelle (56, 56') des Unterlenkers (24, 26) angreift.

7.  Verfahren nach einem der vorhergehenden Ansprüche,
**dadurch gekennzeichnet, dass** der Wirkpunkt (WP) und/oder der Arbeitspunkt (P_a) und/oder die Arbeitslinie (AL1) jeweils in Abhängigkeit von einem Bezugswinkel ($\alpha$, $\beta$) ermittelt wird, den eine gedachte Verlängerung des Unterlenkers (24, 26) mit einer Bezugsgeraden (46) einschließt.

8.  Verfahren nach Anspruch 7, **dadurch gekennzeichnet, dass** die Bezugsgerade (46) parallel zu einer Längsrichtung (34) des Traktors (16) verläuft.

9.  Verfahren nach einem der vorhergehenden Ansprüche,
**dadurch gekennzeichnet, dass** zur Ermittlung des Wirkpunktes (WP) ein Koordinatensystem (20) definiert wird, dessen Koordinatenursprung (40) einem Referenzpunkt, insbesondere einem Mittelpunkt einer Hinterachse (42) des Traktors (16), entspricht.

10. Verfahren nach einem der vorhergehenden Ansprüche,
**dadurch gekennzeichnet, dass** der Zugpunkt (P_z) in Abhängigkeit von einer Änderung eines Relativabstandes (d_r) zwischen den dem Traktor (16) zugewandten Kopplungsstellen (56, 56') der beiden Unterlenker (24, 26) verstellt wird.

**11.** Verfahren nach Anspruch 10, **dadurch gekennzeichnet, dass** die dem Traktor (16) zugewandte Kopplungsstelle (56, 56') eines Unterlenkers (24, 26) oder beider Unterlenker (24, 26) mit Antriebsmitteln (68) gekoppelt ist, welche zur Veränderung des Relativabstandes (d_r) ansteuerbar sind.

**12.** Verfahren nach einem der vorhergehenden Ansprüche,
**dadurch gekennzeichnet, dass** der Polpunkt (P_p) in Abhängigkeit von einer Änderung eines Kopplungsabstandes (d_k) zwischen einer Bezugsgeraden (88) und der dem Traktor (16) zugewandten Kopplungsstelle (93) des Oberlenkers (28) verstellt wird.

**13.** Verfahren nach Anspruch 12, **dadurch gekennzeichnet, dass** die Kopplungsstelle (93) des Oberlenkers (28) mit einer Antriebseinheit (106) gekoppelt ist, welche zur Veränderung des Kopplungsabstandes (d_k) ansteuerbar ist.

FIG. 1

22

20

30

32

10   10   10

16

18

V_soll:
WP_soll(x,y,z) -> P_z;P_p
AL1(b_soll;d_r_soll)
AL2(d_k_soll)

Vergleich | S-v

L_ist:
P_z(x,y);P_p(x,z);P_a(x,y,z)
AL1(b;d_r)
AL2(d_k)

14

12

WP:
P_z
P_p

P_a

FIG. 2

FIG. 3

FIG. 4

FIG. 5

FIG. 6B

FIG. 6A

FIG. 7

FIG. 8

FIG. 9A

FIG. 9B

FIG. 9C

FIG. 10

FIG. 11A

FIG. 11B

FIG. 12

FIG. 13

FIG. 14A

FIG. 14B

FIG. 15A

FIG. 15B

EP 3 721 691 A1

Europäisches
Patentamt

European
Patent Office

Office européen
des brevets

# EUROPÄISCHER RECHERCHENBERICHT

Nummer der Anmeldung

EP 20 16 8392

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 28 45 111 A1 (LEMKEN KG PFLUGFAB) 24. April 1980 (1980-04-24) | 1-3,5-9, 12 | INV. A01B59/041 A01B59/06 |
| Y | * das ganze Dokument * | 1 | |
| A | * Abbildung 1 * | 4,10,11, 13 | |
| | ----- | | |
| X | DE 31 07 137 A1 (BRENIG FA KARL & JOSEF [DE]) 9. September 1982 (1982-09-09) * das ganze Dokument * * Abbildung 1 * | 1 | |
| | ----- | | |
| X | DE 196 08 140 C1 (EBERHARDT MASCHINENFABRIK GMBH [DE]) 25. September 1997 (1997-09-25) * das ganze Dokument * * Abbildung 1 * | 1 | |
| | ----- | | |
| X | DE 38 35 812 A1 (RABEWERK CLAUSING HEINRICH [DE]) 26. April 1990 (1990-04-26) * das ganze Dokument * * Abbildung 1 * | 1 | |
| | ----- | | RECHERCHIERTE SACHGEBIETE (IPC) |
| X | GB 2 172 486 A (RANSOMES SIMS & JEFFERIES PLC) 24. September 1986 (1986-09-24) * das ganze Dokument * * Abbildung 2 * | 1 | A01B |
| | ----- | | |
| X | DE 32 48 633 A1 (RABEWERK CLAUSING HEINRICH [DE]) 12. Juli 1984 (1984-07-12) * das ganze Dokument * * Abbildung 2 * | 1 | |
| | ----- | | |
| X | DE 199 51 840 A1 (DEERE & CO [US]) 10. Mai 2001 (2001-05-10) | 1 | |
| Y | * das ganze Dokument * * Abbildung 1 * | 1 | |
| | ----- | | |
| | -/-- | | |

Der vorliegende Recherchenbericht wurde für alle Patentansprüche erstellt

| Recherchenort | Abschlußdatum der Recherche | Prüfer |
|---|---|---|
| München | 7. August 2020 | Wagner, A |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument
............................................................................
& : Mitglied der gleichen Patentfamilie, übereinstimmendes
  Dokument

EPO FORM 1503 03.82 (P04C03)

Seite 1 von 2

**Europäisches Patentamt**
**European Patent Office**
**Office européen des brevets**

# EUROPÄISCHER RECHERCHENBERICHT

Nummer der Anmeldung

EP 20 16 8392

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| T | DE 102 20 998 A1 (DEERE & CO [US])<br>27. November 2003 (2003-11-27)<br>* das ganze Dokument *<br>* Abbildung 1 *<br>----- | 1 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| München | 7. August 2020 | Wagner, A |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
.........................................................................................................
& : Mitglied der gleichen Patentfamilie, übereinstimmendes
Dokument

EPO FORM 1503 03.82 (P04C03)

Seite 2 von 2

**ANHANG ZUM EUROPÄISCHEN RECHERCHENBERICHT
ÜBER DIE EUROPÄISCHE PATENTANMELDUNG NR.**

EP 20 16 8392

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-08-2020

| Im Recherchenbericht angeführtes Patentdokument | Datum der Veröffentlichung | Mitglied(er) der Patentfamilie | Datum der Veröffentlichung |
|---|---|---|---|
| DE 2845111 A1 | 24-04-1980 | AT 362951 B<br>BE 879417 A<br>DE 2845111 A1<br>FR 2438959 A1<br>GB 2033719 A<br>NL 7907430 A | 25-06-1981<br>01-02-1980<br>24-04-1980<br>16-05-1980<br>29-05-1980<br>21-04-1980 |
| DE 3107137 A1 | 09-09-1982 | KEINE | |
| DE 19608140 C1 | 25-09-1997 | DE 19608140 C1<br>IT MI970416 A1 | 25-09-1997<br>26-08-1998 |
| DE 3835812 A1 | 26-04-1990 | DE 3835812 A1<br>EP 0364751 A1 | 26-04-1990<br>25-04-1990 |
| GB 2172486 A | 24-09-1986 | KEINE | |
| DE 3248633 A1 | 12-07-1984 | DE 3248633 A1<br>EP 0158685 A1 | 12-07-1984<br>23-10-1985 |
| DE 19951840 A1 | 10-05-2001 | AR 032288 A1<br>AT 267508 T<br>BR 0005106 A<br>DE 19951840 A1<br>EP 1095549 A1<br>US 6321851 B1 | 05-11-2003<br>15-06-2004<br>19-06-2001<br>10-05-2001<br>02-05-2001<br>27-11-2001 |
| DE 10220998 A1 | 27-11-2003 | DE 10220998 A1<br>EP 1360886 A1<br>US 2003217852 A1 | 27-11-2003<br>12-11-2003<br>27-11-2003 |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 9555813 B2
- DE 102015224757 A1